# EUROPEAN PATENT APPLICATION

(11) **EP 4 632 898 A1**
(43) Date of publication of application: **15.10.2025**
(21) Application number: 25167250.7
(22) Date of filing: 31.03.2025
(51) Int. Cl.: H01M 50/207, H01M 50/291, H01M 50/244, H01M 50/251, H01M 10/658, B65D 81/00, H01G 11/10, H01M 50/342

(54) **ENERGY STORAGE CONTAINER**

(30) Priority: 31.03.2024 CN 202410384418; 31.03.2024 CN 202420646467 U; 21.06.2024 WO PCT/CN2024/100665
(71) Applicant: Eve Energy Storage Co., Ltd, Wuhan, Hubei 430074 (CN)
(72) Inventor: PANG, Yuncong, Wuhan, Hubei, 430074 (CN); XIANG, Jian, Wuhan, Hubei, 430074 (CN); ZOU, Yulang, Wuhan, Hubei, 430074 (CN); ZHAO, Zihui, Wuhan, Hubei, 430074 (CN); YI, Haohao, Wuhan, Hubei, 430074 (CN)
(74) Representative: Berggren Oy

(57) **Abstract**

The energy storage container according to the present application includes a frame (10) and multiple battery racks (20). The frame (10) comprises multiple corner posts that extend in the direction of gravity. Multiple battery racks (20) are installed within the frame (10) and are arranged at intervals. The multiple corner posts include a first corner post (111) that is adjacent to the battery racks (20), the first corner post (111) includes an inner side facing the battery racks (20), and a part of the inner side is recessed in a direction away from the battery racks (20) to form an accommodation space (1110), the accommodation space (1110) accommodates at least parts of the battery racks (20).

## Description

### TECHNICAL FIELD

The present application relates to the field of energy storage equipment technology, and specifically relates to an energy storage container.

### BACKGROUND

With the increasing demand for the electrical capacity of an energy storage container, the number of battery packs and auxiliary components included in the energy storage container has also increased, resulting in an increase in the total volume of the energy storage system. In some application scenarios, the overall size of the energy storage container is often restricted, for example, during transporting the energy storage container, and the loading requirements cannot be met well for large energy storage containers. In the related art, in order to adapt to the layout of some components that constitute the energy storage container and avoid installation interference between components, space needs to be provided in the energy storage container for the installation of the components.

However, the installation space provided in the related art is often excessive, thereby increasing the volume of the energy storage container and causing the energy storage container to occupy a large amount of space.

### SUMMARY

The present application provides an energy storage container configured to install battery packs, and the energy storage container includes:

a frame including multiple corner posts, the corner posts each extending along a direction of gravity;

multiple battery racks installed in the frame, and the multiple battery racks being arranged at intervals to form an installation space for installing a battery pack between every two adjacent ones of the multiple battery racks;

wherein the multiple corner posts include at least one first corner post, each first corner post is arranged adjacent to the battery racks and includes an inner side facing the battery racks, and a part of the inner side of the first corner post is recessed in a direction away from the battery racks to form an accommodation space, the accommodation space is configured to accommodate at least parts of the battery racks.

In the energy storage container according to the present application, a part of the inner side of the first corner post is recessed in a direction away from the battery racks to form the accommodation space, so that the first corner post can accommodate at least parts of the battery racks installed in the frame through the accommodation space. The advantage is that the frame is allowed to be loaded with the battery packs and electrical equipment without having to enlarge the overall size of the frame to avoid interference between the battery racks and the frame, which is conducive to improving the structural compactness of the energy storage container.

### BRIEF DESCRIPTION OF THE DRAWINGS

FIG. 1 is a diagram of an overall structure of an energy storage container according to an embodiment of the present application.
FIG. 2 is a diagram of a structure inside the energy storage container according to an embodiment of the present application.
FIG. 3 is a diagram of a structure of a frame of the energy storage container according to an embodiment of the present application.
FIG. 4 is a schematic diagram of a structure at one end of the frame according to an embodiment of the present application.
FIG. 5 is a cross-sectional view of a first corner post according to an embodiment of the present application.
FIG. 6 is a diagram of assembly relationship between the first corner post and a battery rack according to an embodiment of the present application.
FIG. 7 is a cross-sectional view of a second corner post according to an embodiment of the present application.
FIG. 8 is a diagram of assembly relationship between the second corner post and a compartment door according to an embodiment of the present application.
FIG. 9 is a schematic diagram of a structure at another end of the frame according to an embodiment of the present application.
FIG. 10 is a cross-sectional view of a fourth corner post according to an embodiment of the present application.
FIG. 11 is a diagram of assembly relationship between the fourth corner post and a side plate according to an embodiment of the present application.
FIG. 12 is a cross-sectional view of a first crossbeam according to an embodiment of the present application.
FIG. 13 is a diagram of assembly relationship between the first crossbeam and the compartment door according to an embodiment of the present application.
FIG. 14 is an orthographic view of a first end of the frame according to an embodiment of the present application.
FIG. 15 is an exploded schematic diagram of a bearing guide rail according to an embodiment of the present application.
FIG. 16 is a schematic diagram of a structure of a bearing portion according to an embodiment of the present application.
FIG. 17 is a schematic diagram of a structure of a support beam according to an embodiment of the present application.

### Description of reference signs:

### 1 Energy Storage Container;

10 Frame; 110 Bottom Side; 120 Top Side; 130 First Side; 140 Second Side; 150 First End; 160 Second End; 111 First Corner Post; 1110 Accommodation Space; 1111 First Inner Wall; 11111 First Section; 11112 Second Section; 11113 First Connecting Section; 1112 First Outer Wall; 112 Second Corner Post; 1120 Assembly Space; 1140 First Accommodation Space; 1121 Second Inner Wall; 11211 Fifth Section; 11212 Sixth Section; 11213 Third Connecting Section; 1122 Second Outer Wall; 11221 Third Section; 11222 Fourth Section; 11223 Second Connecting Section; 113 Fourth Corner Post; 1130 Avoidance Space; 1131 Fourth Inner Wall; 1132 Fourth Outer Wall; 11321 Seventh Section; 11322 Eighth Section; 11323 Fourth Connecting Section; 121 First Crossbeam; 1210 Accommodation Groove; 1211 Bottom Wall; 1212 Top Wall; 12121 Ninth Section; 12122 Tenth Section; 12123 Fifth Connecting Section; 122 Second Crossbeam; 123 Third Crossbeam; 124 Fourth Crossbeam; 125 Fifth Crossbeam; 126 Sixth Crossbeam; 127 Seventh Crossbeam; 128 Eighth Crossbeam; 13 Pillar; 14 First Column; 16 Second Connecting Rod; 18 Pipeline;

20 Battery Rack; 210 First Battery Rack; 21 First Cross Bar; 22 Second Cross Bar; 23 Vertical Pole; 24 Bearing Guide Rail; 241 Bearing Portion; 2411 Bearing Assembly; 24111 Bearing Edge; 24112 Limiting Edge; 2412 Connecting Assembly; 24121 First Connecting Edge; 24122 Second Connecting Edge; 24123 Reinforcing Structure; 242 Guide Portion; 2421 Guide Assembly; 24211 Guide Edge; 2422 Spacer Plate; 25 Third Cross Bar; 26 Support Assembly; 261 First Support Rod; 262 Second Support Rod; 263 Third Support Rod; 264 Fourth Support Rod; 265 Second Column; 266 First Connecting Rod;

31 Side Plate; 311 First Side Plate; 32 Compartment Door; 321 Body Part; 322 Locking Rod; 33 Top Plate; 331 Explosion Venting Plate; 34 Rotating Connection Assembly;

40 Support Beam; 41 First Wing Plate; 42 Second Wing Plate; 43 Web Plate; 431 Web Plate End; 432 Web Plate Middle Part.

### DETAILED DESCRIPTION

In the description of the present application, unless otherwise explicitly stipulated and limited, the terms "in connection", "connected to" and "fixed" should be understood in a broad sense. For example, it can be a fixed connection, a detachable connection, or an integral body; it can be a mechanical connection or an electrical connection; it can be a direct connection or an indirect connection through an intermediary; it can be an internal connection between two elements or an interaction relationship between two elements. For those of ordinary skilled in the art, the specific meanings of the above terms in the present application may be understood based on specific circumstances.

In the present application, unless otherwise explicitly stipulated and limited, a first feature "above" or "below" a second feature may include direct contact between the first feature and the second feature, or may further include the first feature and second feature not in direct contact but through additional features contact between them. Furthermore, the first feature "above", "over" and "on" the second feature include that the first feature being directly above and diagonally above the second feature, and the first feature has a higher horizontal height than the second feature. The first feature "below", " being lower of" and "under" the second feature includes the first feature being directly below and diagonally below the second feature, and the first feature has a smaller horizontal height than the second feature.

In the description of this embodiment, terms such as "upper", "lower", "right" are used for orientation or positional relationships based on the orientations or positional relationships illustrated in the drawings. They are configured to facilitate description and simplify operations, rather than indicating or implying that the device or element referred to must have a specific orientation, be constructed and operate in a specific orientation, and therefore is not to be construed as a limitation on the present application. In addition, the terms "first" and "second" are configured to differentiate in description and have no special meaning.

With the increasing demand for the electrical capacity of an energy storage container, the number of battery packs and auxiliary components included in the energy storage container has also increased, resulting in an increase in the total volume of the energy storage system. In some application scenarios, the overall size of the energy storage container is often restricted, for example, during transporting the energy storage container, and the loading requirements cannot be met well for larger energy storage containers. In the related art, in order to adapt to the layout of some components that constitute the energy storage container and avoid installation interference between components, space needs to be provided in the energy storage container for the installation of the components. However, the installation space provided in the related art is often excessive, thereby increasing the volume of the energy storage container and causing the energy storage container to occupy a large amount of space.

Based on the fact that the energy storage container occupies a large amount of space in the related art, embodiments of the present application provide an energy storage container.

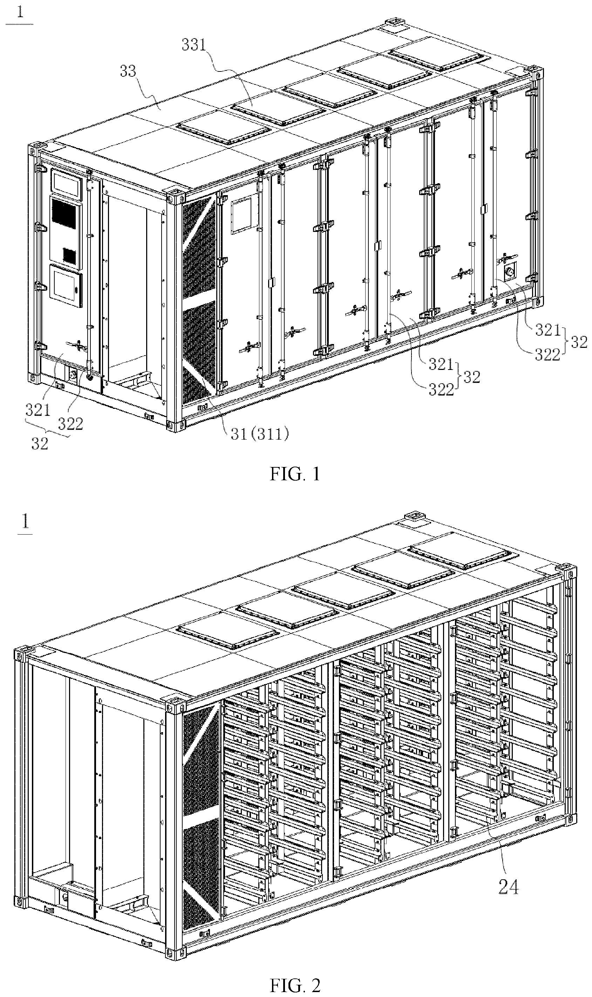

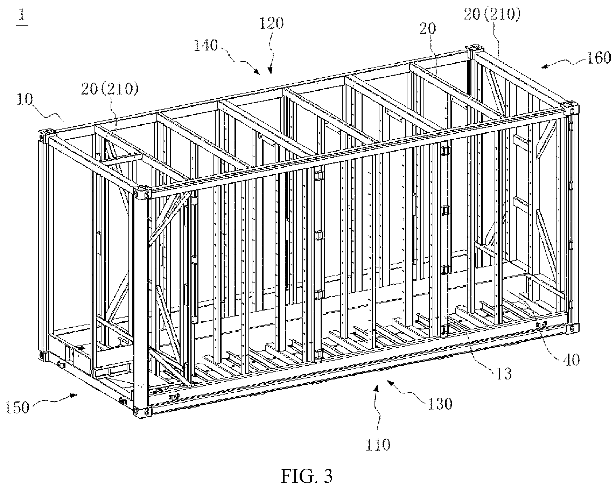

Please refer to FIG. 1 to FIG. 3, FIG. 1 is a diagram of an overall structure of an energy storage container according to an embodiment of the present application. FIG. 2 is a diagram of a structure inside the energy storage container according to an embodiment of the present application. FIG. 3 is a diagram of a structure of a frame of the energy storage container according to an embodiment of the present application.

The energy storage container 1 according to the present application is configured to install battery packs (not illustrated in the drawings). The energy storage container 1 may include a frame 10 and multiple battery racks 20. The frame 10 is configured as a main structure of the energy storage container 1 for connecting other components that constitute the energy storage container 1. The frame 10 may include multiple corner posts and multiple crossbeams. The corner posts each extend along a direction of gravity, and the crossbeams each are connected to the two corner posts. The multiple battery racks 20 are installed in the frame 10 and arranged at intervals, so that an installation space for installing a battery pack is formed between every two adjacent ones of the battery racks 20.

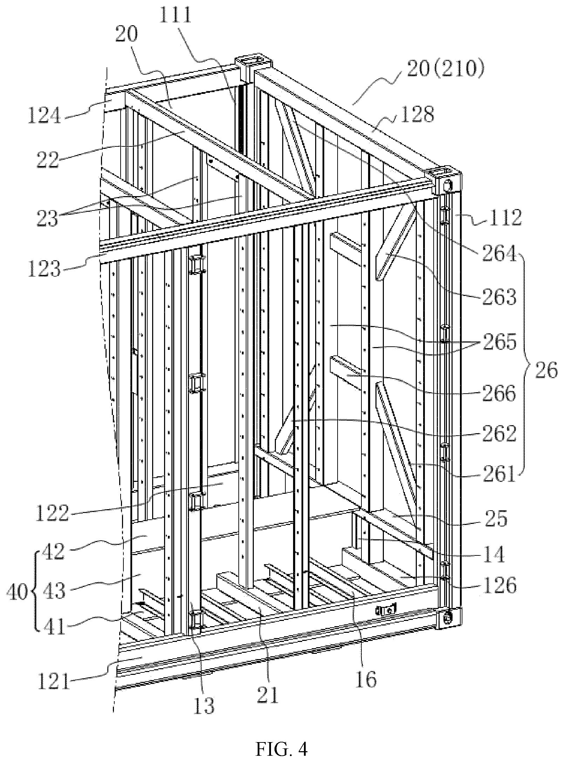

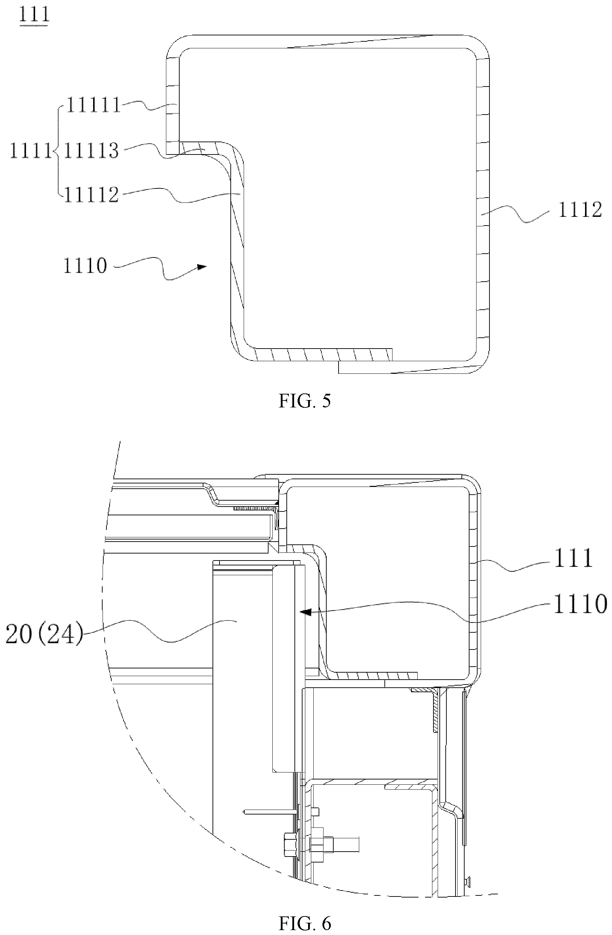

Please refer to FIG. 4 and FIG. 5. FIG. 4 is a schematic diagram of a structure at one end of the energy storage container according to an embodiment of the present application, and FIG. 5 is a cross-sectional view of the first corner post according to an embodiment of the present application. The multiple corner posts may include at least one first corner post 111, and each first corner post 111 is arranged adjacent to the battery racks 20. Each first corner post 111 includes an inner side facing the battery racks 20, and a part of the inner side is recessed in a direction away from the battery racks 20 to form an accommodation space 1110, the accommodation space 1110 is configured to accommodate at least parts of the battery racks 20.

Specifically, each first corner post 111 may include a first inner wall 1111 facing the battery racks 20 and a first outer wall 1112 opposite to the first inner wall 1111 and away from the battery racks 20. When viewed in a direction from the first inner wall 1111 to the first outer wall 1112, at least a part of the projection of the battery racks 20 is located within the range of the first inner wall 1111, and the part, close to the battery rack 20, of the first inner wall 1111 is recessed in a direction towards the first outer wall 1112 to form an accommodation space 1110 that can accommodate at least parts of the battery racks 20. In some embodiments, the first inner wall 1111 may include a first section 11111, a second section 11112, and a first connecting section 11113, wherein the second section 11112 is arranged between the first section 11111 and the first outer wall 1112, and the first connecting section 11113 is connected between the first section 11111 and the second section 11112. When viewed in the direction from the first inner wall 1111 to the first outer wall 1112, the second section 11112 is the part that overlaps with parts of the battery racks 20, so that the first section 11111, the second section 11112, and the first connecting section 11113 are enclosed to form the accommodating space 1110.

Please refer to FIG. 6, which is a diagram of assembly relationship between the first corner post and the battery rack according to an embodiment of the present application. In some embodiments of the present application, after the battery rack 20 has been assembled in the frame 10, due to the accommodation space 1110, at least a part of the battery rack 20, such as the bearing guide rail 24 of the battery rack 20, will be able to be arranged in the accommodation space 1110 to reduce interference with the first corner post 111, the battery rack 20 can be assembled without increasing the size of the frame 10, so that the saving in the size of the energy storage container is maximized, the utilization rate of the space in the energy storage container is improved, and the structural compactness of the energy storage container 1 is improved.

In the embodiment of the present application, a part of the inner side of the first corner post 111 is recessed in a direction away from the battery racks 20 to form the accommodation space 1110, so that the first corner post 111 can accommodate at least parts of the battery racks installed in the frame 10 through the accommodation space 1110. The advantage is that the frame 10 is allowed to be loaded with the battery packs and electrical equipment without having to enlarge the overall size of the frame 10 to avoid interference between the battery racks 20 and the frame 10, which is conducive to improving the structural compactness of the energy storage container 1.

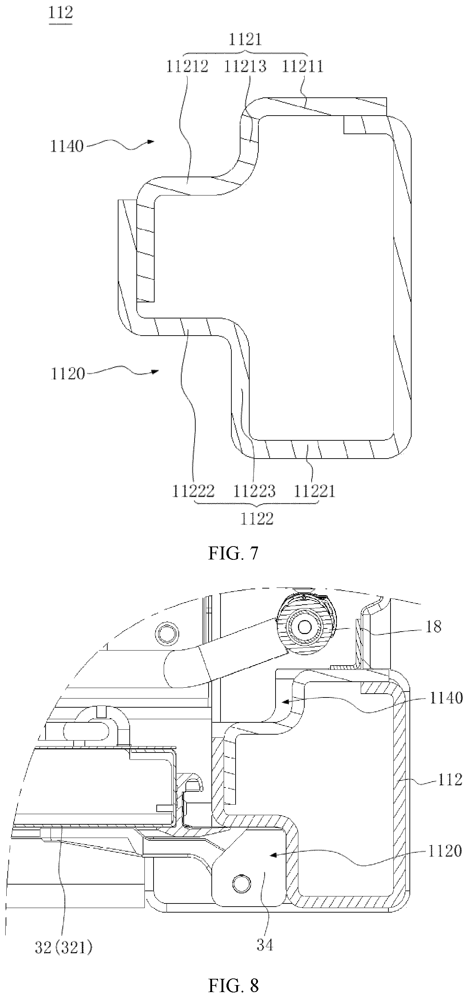

Please refer to FIG. 1 and FIG. 4, the energy storage container 1 may further include a compartment door 32, and the compartment door 32 may be rotatably connected to the frame 10. The multiple corner posts may further include at least one second corner post 112, and each second corner post 112 is arranged adjacent to the compartment door 32. In some embodiments of the present application, the interior of the energy storage container 1 can be divided into a first compartment and a second compartment through partitions (not illustrated in the drawings), wherein at least a part of the space inside the first compartment can be configured to install multiple battery packs, and at least a part of the space inside the second compartment can be configured to install the above-mentioned electrical equipment. The electrical equipment can be an energy storage converter and an energy management system (EMS), etc. The electrical equipment are configured to control and manage the battery packs. Correspondingly, a first compartment opening and a second compartment opening are formed at the energy storage container. The first compartment opening is arranged in the first compartment and is configured to connect the first compartment with the external space. The second compartment opening is arranged in the second compartment and is configured to connect the second compartment with the external space. The compartment door 32 may include a first compartment door and a second compartment door. The first compartment door is arranged at the first compartment opening and is configured to open and close the first compartment opening. The second compartment door is arranged at the second compartment opening and is configured to open and close the second compartment opening. There may be two second corner posts 112, one second corner post 112 is configured to connect to the first compartment door, and the other second corner post 112 is configured to connect to the second compartment door. In the specification, taking the second corner post 112 connected to the first compartment door as an example, the structure of the second corner post 112 according to the embodiment of the present application is schematically described. For the structure of the second corner post 112 connected to the second compartment door, reference may be made to the relevant description. Specifically, please refer to FIG. 7 and FIG. 8. FIG. 7 is a cross-sectional view of the second corner post according to an embodiment of the present application. FIG. 8 is a diagram of assembly relationship between the second corner post and the first compartment door according to an embodiment of the present application. Along a thickness direction of the compartment door 32, the second corner posts 112 each may include a second inner wall 1121 and a second outer wall 1122 that are arranged opposite to each other. The second inner wall 1121 and the second outer wall 1122 are arranged on both sides of the compartment door 32, wherein the second outer wall 1122 may include a third section 11221, a fourth section 11222, and a second connecting section 11223. Along the thickness direction of the compartment door 32, the third section 11221 and the second inner wall 1121 are arranged on both sides of the compartment door 32. The fourth section 11222 is arranged between the third section 11221 and the second inner wall 1121 and is arranged on the side, facing the compartment door 32, of the third section 11221. The second connecting section 11223 is bent and connected between the third section 11221 and the fourth section 11222. The assembly space 1120 is formed by the third section 11221, the fourth section 11222, and the second connecting section 11223. Usually, the compartment door 32 can be rotatably connected to the frame 10 through some rotating connection assemblies 34. The rotating connection assemblies 34 can be universal hinges or other types of hinges. For example, is. A hinge may be installed on the surface, close to the compartment door 32, of the second corner post 112, and the hinge may be connected between the second corner post 112 and the compartment door 32, thereby the compartment door 32 is allowed to be rotatably arranged on the frame 10. **In** the embodiment of the present application, the third section 11221 and the fourth section 11222 can be distributed along the thickness direction of the compartment door 32. The third section 11221 is arranged on the side, away from the battery racks 20, of the compartment door 32, and the fourth section 11222 is arranged on the side, facing the compartment door 32, of the third section 11221. The second connecting section 11223 is bent and connected between the third section 11221 and the fourth section 11222, and is arranged parallel to the thickness direction of the compartment door 32, so that the assembly space 1120 is formed on the side, facing the compartment door 32, of the second outer wall 1122. The hinge is arranged in the assembly space 1120 and is connected to the fourth section 11222 and/or the second connecting section 11223. This design provides the assembly space 1120 for the installation of hinges or other types of rotating connection assemblies 34, so that the rotating connection assembly 34 are installed on the second corner post 112 without increasing the overall space occupied by the energy storage container 1, further improving the structural compactness of the energy storage container 1.

In some embodiments, the second inner wall 1121 of the second corner post 112 may include a fifth section 11211, a sixth section 11212, and a third connecting section 11213. The fifth section 11211 and the sixth section 11212 are arranged at intervals along the thickness direction of the compartment door 32. The sixth section 11212 is arranged between the fifth section 11211 and the second outer wall 1122. The third connecting section 11213 is bent and connected between the fifth section 11211 and the sixth section 11212. A first accommodation space 1140 is formed by the fifth section 11211, the sixth section 11212, and the third connecting sections 11213. The energy storage container 1 may further include a pipeline 18, and the pipeline 18 may be a liquid cooling pipeline configured to transport cooling liquid to the battery packs. At least a part of the pipeline 18 may be arranged on the second corner post 112 along the direction of gravity. Thus, the first accommodation space 1140 may be configured to accommodate a part of the pipeline 18. This design can prevent the pipeline 18 from interfering with the battery packs or some components after being arranged inside the frame 10, so that the layout of the pipeline 18 can be completed without increasing the size of the frame 10, which is conductive to further improving the structural compactness of the energy storage container 1.

In some embodiments, the assembly space 1120 for accommodating the hinge and the first accommodating space 1140 for accommodating the pipeline may be arranged in different corner posts. Specifically, the multiple corner posts may further include at least one third corner post (not illustrated). Each third corner post is arranged adjacent to the pipeline 18. Each third corner post includes a third inner wall adjacent to the pipeline 18, and a part of the third inner wall is recessed in a direction away from the pipeline 18 to form a second accommodation space. When some pipelines 18, such as liquid cooling pipelines configured to transport cooling liquid to the battery packs, are fixed to the third corner post, the second accommodation space can accommodate some of the pipelines. This design also can prevent the pipeline 18 from interfering with the battery packs or other components after being arranged inside the frame 10, so that the layout of pipelines to be completed without increasing the size of the frame 10, which is also conducive to further improving the structural compactness of the energy storage container 1.

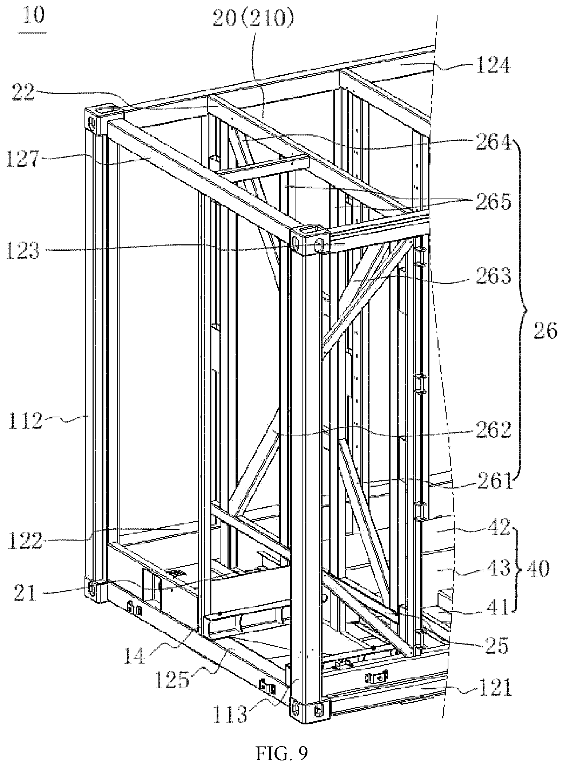

Please refer to FIG. 1 and FIG. 9. FIG. 9 is a schematic diagram of a structure at another end of the energy storage container according to an embodiment of the present application. The energy storage container 1 may further include side plates 31 arranged parallel to the direction of gravity. The side plates 31 are connected to the frame 10 and enclosed with the frame 10 to form a space that can accommodate battery packs and/or electrical equipment. The multiple corner posts may further include at least one fourth corner post 113, and each fourth corner post 113 is arranged adjacent to the side plate 31.

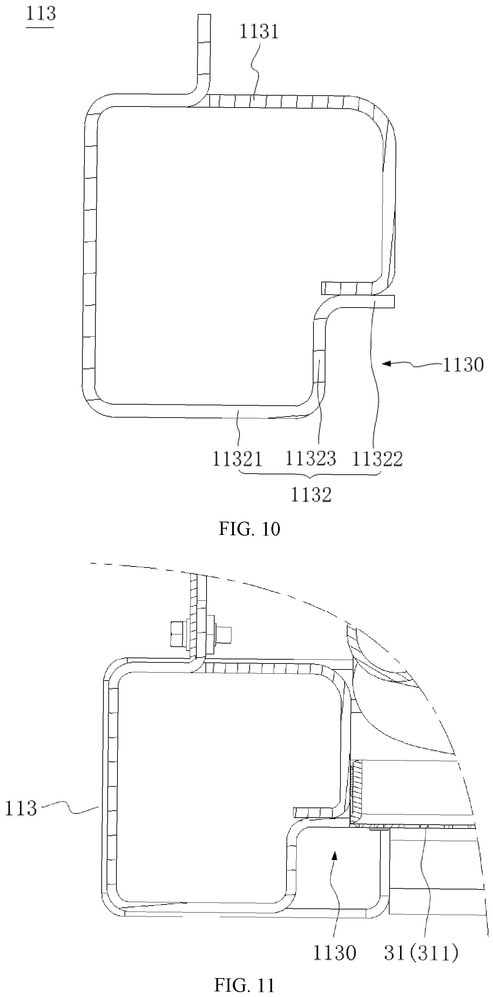

Please refer to FIG. 10 and FIG. 11. FIG. 10 is a cross-sectional view of the fourth corner post according to an embodiment of the present application, and FIG. 11 is a diagram of assembly relationship between the fourth corner post and the side plate according to an embodiment of the present application. Along a thickness direction of the side plate 31, the fourth corner post 113 may include a fourth inner wall 1131 and a fourth outer wall 1132 that are arranged opposite to each other. The fourth outer wall 1132 may include a seventh section 11321, an eighth section 11322, and a fourth connecting section 11323. Along the thickness direction of the side plate 31, the seventh section 11321 and the fourth inner wall 1131 are arranged on both sides of the side plate 31. The eighth section 11322 is arranged between the seventh section 11321 and the fourth inner wall 1131, and is arranged on the side, facing the side plate 31, of the seventh section 11321. The fourth connecting section is bent and connected between the seventh section 11321 and the eighth section 11322. An avoidance space 1130 is formed by the seventh section 11321, the eighth section 11322, and the fourth connecting section 11323.

Usually, the surrounding edges of the side plate 31 are configured as installation edges for connecting with the frame 10. In order to facilitate the installation of the side plate 31 onto the frame 10, in some embodiments, the eighth section 11322 can be positioned closer to the side plate 31 than the seventh section 11321 in a direction from the fourth outer wall 1132 to the fourth inner wall 1131, i.e., in the thickness direction of the side plate 31, or the eighth section 11322 can be flush with the side plate 31, so that the avoidance space 1130 is allowed to be closer to the side plate 31 or to be flush with the surface of the side plate 31. During the assembly of the side plate 31, when assembling the side plate 31 to the frame 10, or when disassembling the side plates 31 for maintenance, some installation tools (common examples include a wrench and a screwdriver) need to be used to assemble and disassemble the side plate 31. Due to the avoidance space 1130, during this operation, the installation tool or the hand operating the installation tool, or a part of the installation tool and a part of the hand, can be arranged within the avoidance space 1130, thereby reducing or even avoiding the interference between the installation tool or hand and the fourth corner post 113, so that maintenance personnel can assemble and disassemble the side plate 31 with high proficiency, thereby improving the convenience of assembly and disassembly, and increasing the efficiency of assembly and disassembly.

Please refer to FIG. 3, in some embodiments of the present application, the frame 10 can be of a rectangular shape. When the frame 10 is of a rectangular shape, the frame 10 may include a bottom side 110, a top side 120, a first side 130, and a second side 140, correspondingly. The bottom side 110 and the top side 120 are arranged opposite to each other in the direction of gravity. The first side 130 and the second side 140 are arranged opposite to each other, and the first side 130 is connected to one side of the bottom side 110 and one side of the top side 120, and the second side 140 is connected to the other side of the bottom side 110 and the other side of the top side 120.

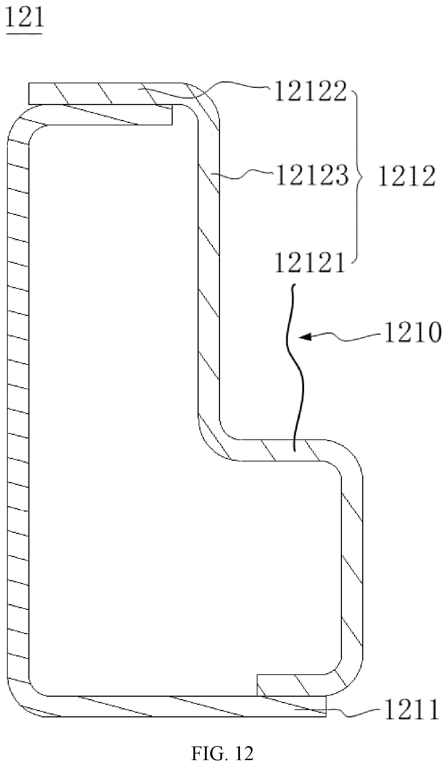

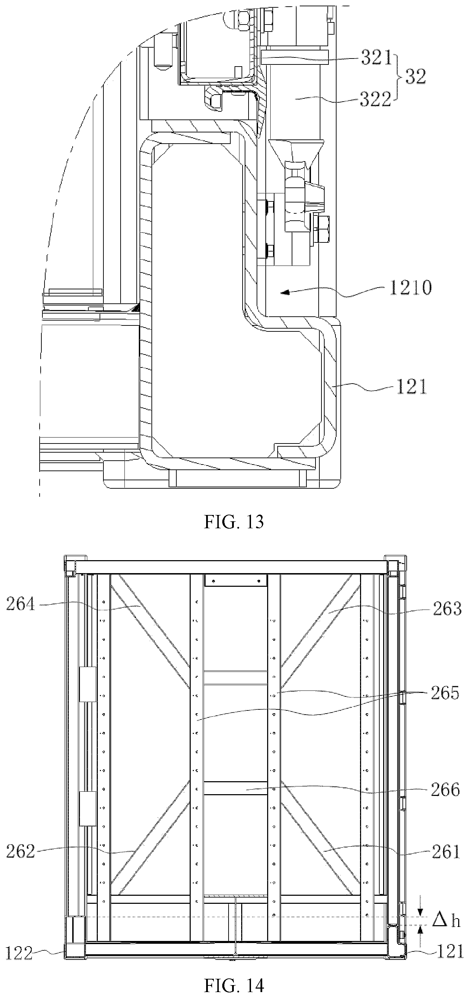

Please refer to FIG. 9, the crossbeams of the frame 10 may include a first crossbeam 121 arranged at the connection position between the bottom side 110 and the first side 130. Please refer to FIG. 12, which is a cross-sectional view of the first crossbeam according to an embodiment of the present application. Along the direction of gravity, the first crossbeam 121 may include a bottom wall 1211 and a top wall 1212 that are arranged opposite to each other, and the top wall 1212 may include a ninth section 12121, a tenth section 12122, and a fifth connecting section 12123. Along the direction of gravity, the ninth section 12121 and the tenth section 12122 are arranged at intervals, the ninth section 12121 is arranged close to the first side 130 and the bottom side 110, and the tenth section 12122 is arranged close to the second side 140 and the top side 120. The fifth connecting section 12123 is bent and connected between the ninth section 12121 and the tenth section 12122. An accommodation groove 1210 is formed by the ninth section 12121, the tenth section 12122, and the fifth connecting section 12123. At least a part of the compartment door 32 is arranged on the first side 130 (i.e., the first compartment door) and is rotatably connected to the frame 10, and at least the part, close to the first crossbeam 121, of the compartment door 32 can be accommodated by the accommodation groove 1210. Specifically, taking the compartment door 32 that is configured to open or close the first compartment opening, i.e., the first compartment door, as an example, for the compartment door 32 that is configured to open or close the second compartment opening, i.e., the second compartment door, reference may be made to the relevant description. In some embodiments, the compartment door 32 may include a body part 321 and a locking rod 322 for locking the body part 321 to the first compartment opening. The locking rod 322 is rotatably connected to the side, away from the hinge, of the body part 321. The ninth section 12121 and the tenth section 12122 are arranged facing the top side 120. The fifth connecting section 12123 is bent and connected between the ninth section 12121 and the tenth section 12122, so that the ninth section 12121, the tenth section 12122, and the fifth connecting section 12123 are enclosed to form the accommodation groove 1210. Please refer to FIG. 13, FIG. 13 is a diagram of assembly relationship between the first crossbeam and the first compartment door according to an embodiment of the present application. When the first compartment opening is closed by the first compartment door, the end, facing the bottom side 110, of the locking arm 322 will be able to be placed inside the accommodation groove 1210 and abut against the surface, facing the accommodation groove 1210, of the fifth connecting section 12123, while the bottom end, facing the bottom side 110, of the main body part 321 can be opposite to or abut against the tenth section 12122. Therefore, the accommodation groove 1210 can be served to accommodate at least a part of the first compartment door, so that the locking arm 322 is prevented from occupying additional space in the closed state of the first compartment door, which further enhances the structural compactness of the energy storage container 1.

Please refer to FIG. 9 and FIG.14. FIG. 14 is an orthographic view of the first end of the frame according to an embodiment of the present application. In addition to the above-mentioned first crossbeam 121, the crossbeams of the frame 10 may further include a second crossbeam 122. The second crossbeam 122 is arranged at the connection position between the bottom side 110 and the second side 140. In some embodiments of the present application, along the direction of gravity, the first crossbeam 121 is of a first height, the second crossbeam 122 is of a second height, and the second height is greater than the first height. Because significant force is applied on the frame 10 in the direction of gravity, in the present application, the second height of the second crossbeam 122 is set to be greater than the first height of the first crossbeam 121. The advantage is that the rigidity and strength of the second crossbeam 122 are increased, which is beneficial to improving the bearing capacity of the frame 10.

Please refer to FIG. 3 and FIG. 4, the crossbeams may further include a third crossbeam 123 and a fourth crossbeam 124. The third crossbeam 123 is arranged at the connection position between the first side 130 and the top side 120, and the fourth crossbeam 124 is arranged at the connection position between the second side 140 and top side 120. The frame 10 may further include multiple pillars 13, and multiple pillars 13 may be arranged between the first crossbeam 121 and the third crossbeam 123, as well as between the second crossbeam 122 and the fourth crossbeam 124. Through long-term practice in implementing the technical solution of the present application, the inventors of the present application have found that if the width of each pillar 13 is set to not less than 100 mm along a direction parallel to the first crossbeam 121, the good structural strength of the energy storage container 1 can be ensured while minimizing the size of the energy storage container 1, which is conducive to further improving the structural compactness of the energy storage container 1.

Please continue to refer to FIG. 3 and FIG. 4. Multiple battery racks 20 are arranged at intervals. One end of each battery rack 20 can be connected to the bottom side 110, and the other end can be connected to the top side 120. Along the direction of gravity, each battery rack 20 can include a first cross bar 21 and a second cross bar 22 arranged at intervals. The first cross bar 21 is arranged on the bottom side 110 and is connected between the first crossbeam 121 and the second crossbeam 122. The second cross bar 22 is arranged on the top side 120 and is connected between the third crossbeam 123 and the fourth crossbeam 124. Each battery rack 20 may further include multiple vertical poles 23. At least two vertical poles 23 are connected between the first cross bar 21 and the second cross bar 22, and the at least two vertical poles 23 are arranged at intervals along a length direction of the first cross bar 21. The first cross bar 21 and the second cross bar 22. Preferably, along the direction parallel to the first crossbeam 121, the width of each vertical pole 23 is not less than 50 mm, so that the good strength of the battery rack 20 may be ensured while reducing the lateral width of the battery rack 20, which is beneficial to further improving the structural compactness of the energy storage container 1.

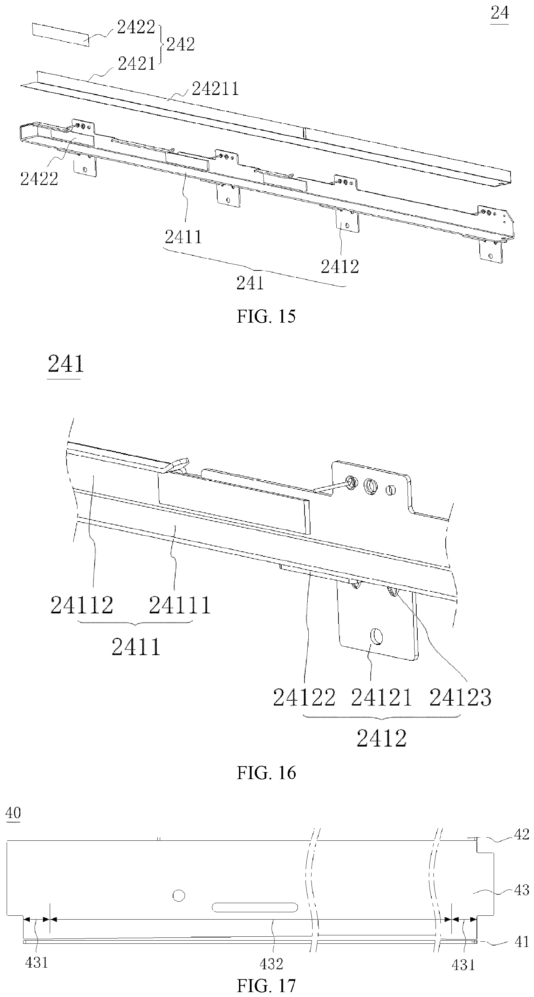

Please refer to FIG. 2. Each battery rack 20 can further include multiple bearing guide rails 24. The multiple bearing guide rails 24 are arranged at intervals between the first cross bar 21 and the second cross bar 22, and can both be connected to at least two vertical poles 23. For every two adjacent battery racks 20, multiple bearing guide rails 24 are arranged at intervals along the direction of gravity on one side, facing the other battery rack 20, of one battery rack 20. The multiple bearing guide rails 24 of one battery rack 20 are arranged at the same height and opposite to the multiple bearing guide rails 24 of the other battery rack 20. A bearing space for installing the battery packs is formed between the two bearing guide rails 24, which are arranged at the same height and opposite to each other, of the two battery racks 20. The bearing space gradually narrows from the first side 130 toward the second side 140. Please refer to FIG. 15, which is an exploded schematic diagram of a bearing guide rail according to an embodiment of the present application. **In** order to facilitate placing the battery packs on the two bearing guide rails 24, which are arranged opposite to each other, of the two battery racks, each bearing guide rail 24 may include a bearing portion 241 and a guide portion 242. The bearing portion 241 is connected to at least two vertical poles 23. The guide portion 242 is fixed to the bearing portion 241, and one end of the guide portion 242 is close to the first side 130, and the other end is close to the second side 140. The thickness of the guide portion 242 gradually increases from the first side 130 to the second side 140, so that the space between two bearing guide rails 24, which are arranged at the same height and opposite to each other, may gradually narrow in the direction from the first side 130 to the second side 140. Thus, during the process of assembling the battery packs onto the bearing guide rails 24, the two guide portions 242, which are arranged at the same height and opposite to each other, are allowed to effectively guide the battery packs during the process of pushing the battery packs into the bearing guide rails, thereby avoiding the battery packs from deviating from the desired direction when being pushed in.

Please continue to refer to FIG. 16, which is a schematic diagram of a structure of the bearing portion 241 according to an embodiment of the present application. In some embodiments, the bearing portion 241 may include a bearing assembly 2411 and a connecting assembly 2412. The bearing assembly 2411 is configured to bear the battery packs, and the connecting assembly 2412 is configured to firmly connect the bearing assembly 2411 to the vertical pole 23. Specifically, the bearing assembly 2411 may include a bearing edge 24111 and a limiting edge 24112, and the bearing edge 24111 is arranged to intersect with the limiting edge 24112. For example, the bearing edge 24111 may be vertically or almost vertically connected to the limiting edge 24112. The bearing edge 24111 is configured to bear the battery packs, and the limiting edge 24112 is connected to the vertical pole 23. The limiting edge 24112 is configured to limit the direction of movement of the battery packs and reduce the occurrence of deviation from the desired direction when the battery packs are pushed into the bearing space. The connecting assembly 2412 can be configured as a 45-degree bending piece. The connecting assembly 2412 can include a first connecting edge 24121 and a second connecting edge 24122. The first connecting edge 24121 can be connected to the vertical pole 23, and the second connecting edge 24122 can be connected to the bearing edge 24111 for supporting the bearing edge 24111. A reinforcing structure 24123 can further be arranged between the first connecting edge and the second connecting edge of the connecting assembly 2412 to improve the structural strength of the connecting assembly 2412. For example, a boss or rib plate can be designed between the first connecting edge 24121 and the second connecting edge 24122. Taking the boss as an example, the boss can be arranged at one end, close to the second connecting edge 24122, of the first connecting edge 24121 to be used for abutting against the second connecting edge 24122.

**In** some embodiments, the guide portion 242 may include a guide assembly 2421 and multiple spacer plates 2422. The guide assembly 2421 may include a guide edge 24211. When the guide assembly 2421 is assembled onto the bearing portion 241, the guide edge 24211 of the guide assembly 2421 will be attached to the limiting edge 24112 of the bearing assembly 2411. The spacer plates 2422 may be arranged at intervals in a direction from the first side to the second side, i.e., along the length direction of the limiting edge 24112, and sandwiched between the guide edge 24211 and the limiting edge 24112. Alternatively, some of the spacer plates 2422 are sandwiched between the guide edge 24211 and the limiting edge 24112, and others of the spacer plates 2422 are arranged on the surface, facing away from the limiting edge 24112, of the guide edge 24211. In the direction from the first side to the second side, the thickness of the guide edge 24211 and/or the spacer plate 2422 can be designed to increase sequentially. Specifically, the thickness of the guide edge can be set to increase progressively from the first side to the second side. Alternatively, multiple spacer plates can be stacked for use, or several spacer plates with different thicknesses can be designed. For example, when the spacer plates are attached to one end, close to the first side 130, of the limiting edge 24112, the spacer plates may not be stacked, or spacer plates with a small thickness may be used; while when the spacer plates are attached to the other end, close to the second side 140, of the limiting edge 24112, two or more spacer plates can be stacked, or spacer plates with a large thickness may be used, so that the bearing space between the two bearing guide rails 24, which are arranged at the same height and opposite to each other, may gradually narrow from the first side to the second side, thereby providing an effective guiding effect during the process of pushing the battery packs. Of course, the implementation of using a guide edge with the thickness gradually increasing along the length direction can also provide an effective guiding effect during the process of pushing the battery packs. The use of spacer plates with different thicknesses or the stacking of spacer plates on the premise of using the guide edge with increasing thickness along the length direction, can also provide an effective guiding effect during the process of pushing the battery packs. Those skilled in the art can choose one or any combination of the above options based on the situation.

In some embodiments of the present application, the spacer plates 2422 sandwiched between the guide edge 24211 and the limiting edge 24112 can be made of sheet metal, polycarbonate (PC), or any other suitable material; while because the spacer plates 2422 arranged on the side, away from the limiting edge 24112, of the edge 24211 are in direct contact with the surface of the battery pack, the spacer plates used in this case can be made of an relatively soft material such as rubber, silicone, etc., to buffer the impact on the battery packs when being pushed.

Please refer to FIG. 1, the energy storage container 1 may further include a top plate 33 arranged on the top side 120 of the frame 10, and at least a part of the top plate 33 is arranged to be arched away from the top side 120. For example, in some embodiments, the middle part of the top plate 33 may be arranged to be arched away from the top side 120 of the frame 10 by a preset height. For example, there may be a distance of 10 mm between the middle part of the top plate 33 and the top side 120 of the frame 10. The advantage of this design is that when the energy storage container 1 is used in outdoor environments, water and snow can be easily removed from the top of the energy storage container 1. Alternatively, in other embodiments, for the two opposite sides of the top plate 33, the distance between one side of the top plate 33 and the top side 120 of the frame 10 can be designed to be greater than the distance between the other side of the top plate 33 and the top side 120 of the frame 10. This means that the top plate 33 is set at an angle relative to the top side 120 of the frame 10, and the top plate 33 is inclined relative to the top side 120 of the frame 10, which effectively prevents the accumulation of water and snow on the top of the energy storage container 1 when the energy storage container 1 is used in outdoor environments.

Please continue to refer to FIG. 1, in some embodiments, the energy storage container 1 may further include multiple explosion venting plates 331. Multiple explosion venting openings may be formed at one or more of the side plates 31, the compartment door 32, and the top plate 33. One explosion venting opening is covered by one explosion venting plate 331, and the strength of the explosion venting plate 331 is set to be smaller than the strength of the side plate 31, the compartment door 32 and the top plate 33. For example, five explosion venting openings may be formed at the top plate 33 of the energy storage container 1, and each explosion venting opening is covered by an explosion venting plate 331. Under some unexpected situations, such as a thermal runaway of the battery pack leading to an explosion, the explosion energy can cause the explosion venting plates 331, as weak areas, to be blasted first. The space inside the energy storage container 1 can be in communication with the outside space through the explosion venting openings, and some flammable gas can be released outward from the explosion venting openings first, so that the damage to the energy storage container 1 can be minimized.

In the related art, due to insufficient structural strength of energy storage containers, the bearing capacity of energy storage containers is poor, leading to frequent damage and premature scrapping of energy storage containers. For example, under the condition of a 20-foot standard high cube integrated with 5MWh and 6MWh of energy storage containers, the weighs of the energy storage containers are approximately 43 tons and over 50 tons, respectively, which significantly exceed the maximum load of about 40 tons for a 20-foot standard high-cube energy storage container. This poses uncertain potential risks for the logistics and transportation of energy storage containers.

Please refer to FIG. 3 and FIG. 4, for the situation where energy storage containers in the related art are insufficient in strength and limited in bearing capacity, in some embodiments, the energy storage container 1 may further include a support beam 40. The support beam 40 is installed on the bottom side 110 and connected to one end of each battery rack 20.

Please refer to FIG. 3, FIG. 4, and FIG. 17. FIG. 17 is a schematic diagram of a structure of the support beam 40 according to an embodiment of the present application. The support beam 40 according to the embodiment of the present application may include a web plate 43, the web plate 43 is installed on the bottom side 110. The web plate 43 may include a first edge away from the top side 120, and the first edge is connected to multiple battery racks 20. The first edge may include two web plate ends 431 at two ends and a web plate middle part 432 between the two web plate ends 431. The web plate middle part 432 can be bent towards the top side 120, so that the distance between the web plate middle part 432 and the top side 120 in the direction of gravity is less than the distance between either web plate end 431 and the top side 120.

Specifically, in some embodiments of the present application, along a length direction of the support beam 40, the web plate middle part 432 can be formed into an arc edge through a pre-arching process or any other suitable process (such as shearing, forging, stamping), and the arc edge may be of a curved shape protruding in a direction towards the top side 120. The advantage of this design is that when an external force in the direction of gravity is applied on the support beam 40 during the use of the energy storage container, the web plate 43 can decompose the external force into a downward force along the direction of gravity and force along the length direction of the web plate 43, which is beneficial for reducing the deformation of the web plate 43 in a direction towards the bottom side 110, and eventually improving the bearing capacity of the energy storage container.

Please continue to refer to FIG. 3, FIG. 4, and FIG. 17, in order to further improve the strength of the support beam 40, in addition to the above-mentioned web plate 43, the support beam 40 can further include a first wing plate 41. The first side of the web plate 43 is connected to the first wing plate 41, and the web plate 43 is arranged to be non-coplanar with the first wing plate 41. Specifically, the two web plate ends 431 are connected to the first wing plate 41, and the web plate middle part 432 and the first wing plate 41 are arranged at intervals. Each battery rack 20 may include a first cross bar 21, the first cross bar 21 is located on the bottom side 110, and the first wing plate 41 is connected to each first cross bar 21. For example, some of the first cross bars 21 may include a first sub-cross bar and a second sub-cross bar. The first sub-cross bar is connected between the first crossbeam 121 and the first wing plate 41, and/or the second sub-cross bar is connected between the second crossbeam 122 and the first wing plate 41. Each first sub-cross bar and each second sub-cross bar may include an end face facing the web plate 43 and a side face facing the first wing plate 41. For the first crossbeam 121 and the first wing plate 41, the end, close to the web plate 43, of the first sub-cross bar may be welded to the web plate 43, and/or the side, facing the first wing plate 41, of the first sub-cross bar may be welded to the first wing plate 41. For the second crossbeam 122 and the support beam 40, the end, close to the web plate 43, of the second sub-cross bar may be welded to the web plate 43, and/or the side, facing the first wing plate 41, of the second sub-cross bar may be welded to the first wing plate 41.

Please refer to FIG. 4 and FIG. 9, the crossbeams of the frame 10 may further include a fifth crossbeam 125 and a sixth crossbeam 126. Along the length direction of the support beam 40, the fifth crossbeam 125 and the sixth crossbeam 126 are arranged on both sides of the bottom side 110, and/or are connected to two ends of the first wing plate 41. Specifically, please refer to FIG. 3, in some embodiments of the present application, along the length direction of the support beam 40, the frame 10 can further include a first end 150 and a second end 160 that are arranged opposite to each other. The fifth crossbeam 125 is located at the connection between the bottom side 110 and the first end 150, and the sixth crossbeam 126 is located at the connection between the bottom side 110 and the second end 160. One end of the first wing plate 41 is connected to the fifth crossbeam 125, and the other end of the first wing plate 41 is connected to the sixth crossbeam 126. It can be understood that the two ends of the first wing plate 41 can be connected to the fifth crossbeam 125 and the sixth crossbeam 126 through welding, or can be connected to the fifth crossbeam 125 and the sixth crossbeam 126 through threaded connections. The specific connection ways between the first wing plate 41 and the fifth crossbeam 125, as well as between the first wing plate 41 and the sixth crossbeam 126 are not limited to those described in the present application. The support beam according to the embodiment of the present application connects the two ends of its first wing plate 41 to the fifth crossbeam 125 and the sixth crossbeam 126 at two ends of the energy storage container 1, which is beneficial for improving the connection strength between the components constituting the energy storage container 1, thereby increasing the bearing capacity of the energy storage container 1.

The web plate 43 may further include a second edge close to the top side 120, the support beam 40 may further include a second wing plate 42, and one side of the second wing plate 42 is connected to the second edge. The web plate 43 is arranged to be non-coplanar with the second wing plate 42. In some optional embodiments of the present application, the second edge of the web plate 43 can be welded to the second wing plate 42. When the support beam 40 is assembled on the bottom side 110 of the frame 10, the first wing plate 41 and the second wing plate 42 are arranged on both sides of the first cross bar 21. The first wing plate 41 is arranged on the side, away from the top side 120, of the first cross bar 21, the second wing plate 42 is arranged on a side, away from the first wing plate 41, of the first cross bar 21, and the web plate 43 is connected between the first wing plate 41 and the second wing plate 42.

Please refer to FIG. 3, FIG. 4, and FIG. 9, multiple battery racks 20 are arranged at intervals along the length direction of the support beam 40. In some embodiments, the multiple battery racks 20 include two first battery racks 210 arranged at two ends of the second wing plate 42. Each of the first battery racks 210 may include a third cross bar 25 arranged close to the bottom side 110. Two ends of the second wing plate 42 are respectively connected to the third cross bar 25 of the first battery rack 210. Specifically, in each first battery rack 210, the third cross bar 25 is arranged between the first cross bar 21 and the second cross bar 22, and the third cross bar 25, the first cross bar 21, and the second cross bar 22 are arranged at intervals. One end of the second wing plate 42 is connected to the third cross bar 25 of one first battery rack 210, and the other end of the second wing plate 42 is connected to the third cross bar 25 of the other first battery rack 210. In the embodiment of the present application, the two ends of the second wing plate 42 are connected to the third cross bars 25 at two ends of the energy storage container 1, which is conducive to improving the connection strength between the components of the energy storage container 1, thereby improving the bearing capacity of the energy storage container.

Please continue to refer to FIG. 4 and FIG. 9, in some embodiments, the frame 10 may further include two first columns 14. Each first column 14 is connected between the bottom side 110 and the top side 120. Along the length direction of the web plate 43, one first column 14 is connected to one end of the web plate 43, and the other first column 14 is connected to the other end of the web plate 43. Specifically, the crossbeams of the frame 10 may further include a seventh crossbeam 127 and an eighth crossbeam 128. The seventh crossbeam 127 is arranged at the connection position between a first end 150 and the top side 120, and the eighth crossbeam 128 is arranged at the connection position of a second end 160 and the top side 120. At the first end 150, a first column 14 can be connected between the fifth crossbeam 125 and the seventh crossbeam 127. One end of the web plate 43 can be connected to one end, close to the bottom side 110, of the first column 14 through welding. At the second end 160, another first column 14 can be connected between the sixth crossbeam 126 and the eighth crossbeam 128, or between the third crossbar 25 and the sixth crossbeam 126. Similarly, the other end of the web plate 43 can be connected to the other end, close to the bottom side 110, of the first column 14 through welding. It can be understood that in other embodiments, the ends of the web plate 43 can be connected to the two first columns 14 through other suitable connection ways, such as threaded connections.

In order to facilitate better understanding of the structure of the support beam according to an embodiment of the present application by those skilled in the art, the assembly process and implementation principle of a support beam according to the embodiment of the present application are schematically described here. In some embodiments of the present application, at least a part of the first side of the web plate may be an arc side, and the second side of the web plate may be a straight side, and at least a part of the first side may be bent in a direction towards the second side. For example, the middle part of the first edge of the web plate can be formed into an arc edge in a direction towards the top side, so that the distance between the first edge and the second edge of the web plate includes a first distance between the middle part of the first edge and the second edge, as well as a second distance between the end part of the first edge and the second edge. Through experiments, the inventors have found that when the difference between the first distance and the second distance is in a range of 15 mm to 25 mm, that is, when the maximum distance between the web plate middle and the first wing plate is in a range of 15 mm to 25 mm, the optimal stiffness and strength of the support beam can be obtained, thereby the best bearing capacity of the energy storage container can be achieved. In an example where the web plate is connected to the first wing plate and the second wing plate respectively, the two end parts of the first edge of the web plate can be first abutted against the surface of the first wing plate. In this case, a gap can be observed between the middle part of the web plate and the surface of the first wing plate. Then, solder can be filled into this gap, so that the first edge of the web plate can be connected to the first wing plate through welding process. Afterwards, the second edge of the web plate is abutted against the surface of the second wing plate, and solder is applied close to the position where the second edge of the web plate is abutted against the second wing plate, so that the second edge of the web plate can also be connected to the second wing plate through welding process. In some embodiments, the web plate, the first wing plate, and the second wing plate can be arranged orthogonally or mostly orthogonally to each other, so that a cross-section of the support beam is perpendicular to its length direction and is H-shaped. Practice has shown that this type of support beam with a H-shaped cross-section is good in stiffness and strength. In actual use, when force in the direction of gravity is applied to the support beam, the web plate can decompose the force into force in the direction of gravity and force along the length direction of the support beam, so that the deformation of the support beam in a direction towards the bottom side under the external force is reduced. Due to the gap formed between the web plate middle part and the surface of the first wing, and the strength of the solder selected for welding the web plate and the first wing in the embodiment of the present application is smaller than that of the web plate. When a large force in the direction of gravity is applied to the support beam, the web plate middle part may also move in a direction close to the first wing plate, eventually the web plate middle part is fully abutted against the first wing plate, thereby effectively limiting the deformation of the web plate.

In an embodiment of the present application, the support beam 40 is formed with an arc edge before being put into use, and the support beam 40 is connected to each battery rack 20. Compared with the support beam 40 without an arc edge, the advantage of this design is that when an external force in the direction of gravity is applied to the support beam 40, the ability of the support beam 40 to deform in the direction towards the bottom side 110 can be effectively reduced, which is conducive to greatly improving the stiffness and strength of the support beam 40, thereby effectively improving the bearing capacity of the energy storage container 1, and prolonging the service life of the energy storage container 1.

Please refer to FIG. 4, FIG.9, and FIG.14, at least one battery rack 20 may further include support assembly 26, and each support assembly 26 is connected to the second wing plate 42, the bottom side 110, the top side 120, the first side 130, and the second side 140. Specifically, two ends of the first cross bar 21, the second cross bar 22, and the third cross bar 25 are connected between the first side 130 and the second side 140. Each support assembly 26 may include a support body, a first support rod 261, the second support rod 262, the third support rod 263, and the fourth support rod 264. The support body is connected between the second cross bar 22 and the third cross bar 25, or is connected to the first cross bar 21 the second cross bar 22 and the third cross bar 25. Ends of the first support rod 261, the second support rod 262, the third support rod 263, and the fourth support rod 264 can be connected to the middle part of the support body. The other end of the second support rod 262 and the other end of the second support rod 262 can be connected to two ends of the third cross bar 25. The other end of the third support rod 263 and the other end of the fourth support rod 264 can be connected to two ends of the second cross bar 22. Thereby, each support assembly 26 can be connected to the second wing plate 42, the bottom side 110, the top side 120, the first side 130, and the second side 140. In some embodiments, each support body may include at least two second columns 265 and a first connecting rod 266. Each second column 265 is connected to the first cross bar 21, the second cross bar 22, and the third cross bar 25, or each second column 265 is connected to the first cross bar 21 and the third cross bar 25. The two second columns 265 are arranged at intervals, and the first connecting rod 266 is connected between at least two second columns 265. One of the second columns 265 is arranged close to the first side and connected to the first support rod and the third support rod, and the other second column 265 is arranged close to the second side and connected to the second support rod and the fourth support rod. It can be understood that the support body may only include the second columns 265 without the first connecting rod 266. In this embodiment, the second columns 265 are connected to the first cross bar 21, the second cross bar 22, and the third cross bar 25, or one second column 265 is connected to the second cross bar 22 and the third cross bar 25, and the other second column 265 is connected to the first support rod 261, the second support rod 262, the third support rod 263, and the fourth support rod 264. When force is applied to the energy storage container 1, the force applied to the energy storage container 1 can be transmitted to the support body from multiple directions, for example, from the bottom side, the top side, the first side, and the second side, through the first cross bar 21, the second cross bar 22, the third cross bar 25, the first support rod 261, the second support rod 262, the third support rod 263, and the fourth support rod 264, and then the force is transmitted from the support body to the support beam 40, so that through the support assembly 26, the structural strength of the frame 10 can be further improved and the service life of the energy storage container 1 is prolonged.

Please refer to FIG. 4, in some embodiments, the frame 10 may further include multiple second connecting rods 16 connected between the first wing plate 41 and the first crossbeam 121, as well as between the first wing plate 41 and the second crossbeam 122. The multiple second connecting rods 16 are arranged at intervals along the length direction of the support beam 40. Specifically, for the support beam 40 and the first crossbeam 121, one end of the second connecting rod 16 can be connected to the first crossbeam 121, and the other end of the second connecting rod 16 can be connected to the first wing plate 41. For the support beam 40 and the second crossbeam 122, one end of the second connecting rod 16 can be connected to the second crossbeam 122, and the other end of the second connecting rod 16 can be connected to the first wing plate 41. In the frame 10 according to an embodiment of the present application, the multiple second connecting rods 16 are arranged at intervals between the first wing plate 41 and the first crossbeam 121, as well as between the first wing plate 41 and the second crossbeam 122, so that force applied to the frame 10 can be distributed on the support beam 40, the first crossbeam 121, and the second crossbeam 122 through the second connecting rods 16, thereby effectively increasing the overall stiffness and strength of the frame 10, eventually achieving the effect of improving the bearing capacity of the energy storage container 1.

The energy storage container 1 may further include partitions (not illustrated), a bottom plate, a top plate 33, a first side plate 311, a second side plate, a third side plate, a first fireproof layer, and a second fireproof layer. The partitions are connected to the frame 10 and can be configured to divide the space inside the frame 10 into a first compartment and a second compartment. For example, in some embodiments, the partitions can be arranged perpendicular to the length direction of the first crossbeam 121 to divide the space inside the frame 10 into a first compartment and a second compartment. The first compartment can be configured to install battery packs. At least a part of the space inside the second compartment can be configured as an electrical compartment for installing electrical equipment. The bottom plate is arranged on the bottom side 110, the top plate 33 is arranged on the top side 120, the first side plate 311 is arranged on the first side 130, and the second side plate and the third side plate can both be arranged on the second side 140. The first side plate 311 is arranged opposite to the third side plate, and the second side plate is arranged opposite to the multiple first compartment doors. A first fireproof layer is arranged inside at least one of the first compartment doors and the second side plate. A second fireproof layer is arranged inside at least one of the partitions (not illustrated), the bottom plate, the top plate, the first side plate 311, and the third side plate. The thickness of the first fireproof layer is smaller than the thickness of the second fireproof layer. For example, the first fireproof layer can be made of nano-scale fireproof rock wool, and the second fireproof layer can be made of Class A fireproof rock wool. The first fireproof layer is arranged inside both the first compartment door and the second side plate. The second fireproof layer is arranged inside the partitions (not illustrated in the drawings), the bottom plate, the top plate, the first side plate 311, and the third side plate. That is, the first fireproof layer is arranged on the parts of the first side and the second side that form the first compartment, and the second fireproof layer is arranged on other regions to achieve fireproof effect while effectively increasing the available space of the first compartment. The advantage is that the depth into which the battery packs are pushed along the bearing guide rail 24 can be increased, avoiding interference between the battery packs and the first compartment door, which may prevent the first compartment door from closing the first compartment opening.

In order to facilitate a better understanding of the structure of the energy storage container 1 in the embodiment of the present application, the energy storage container 1 according to one of the embodiments is taken as an example, and its implementation process is schematically described and illustrated as follows.

Please refer to FIG. 3, FIG. 4, and FIG. 9, as an optional embodiment, the frame 10 may be in a shape of a rectangular cube. Therefore, the frame 10 may include four corner posts and eight crossbeams, which are interconnected to form the edges of the frame 10.

Each battery rack 20 includes a first cross bar 21, a second cross bar 22, multiple vertical poles 23, and multiple bearing guide rails 24. The first cross bar 21 is arranged on the bottom side 110 of the frame 10. The second cross bar 22 is arranged on the top side 120 of the battery rack 20. The multiple vertical poles 23 are connected between the first cross bar 21 and the second cross bar 22. Each bearing guide rail 24 is connected to at least two vertical poles 23. Between any two adjacent battery racks 20, the multiple bearing guide rails 24 of one battery rack 20 are arranged opposite to the multiple bearing guide rails 24 of the other battery rack 20.

Please refer to FIG. 4, FIG. 5 and FIG. 6, the corner posts may include a first corner post 111. The first corner post 111 includes a first inner wall facing the battery rack 20. The first inner wall of the first corner post 111 is recessed in a direction away from the battery rack 20. An accommodating space 1110 is formed, and the accommodating space 1110 can accommodate at least parts of the battery racks 20. For example, the accommodating space 1110 can accommodate ends of multiple bearing guide rails 24.

Please refer to FIG. 1, the energy storage container 1 further includes a first side plate 311, a compartment door 32, and a pipeline 18. The first side plate 311 is arranged on the first side 130 of the frame 10. The compartment door may include a first compartment door and a second compartment door. The first compartment door is arranged on the first side 130 of the frame 10 for opening and closing the first compartment opening. A part of the first compartment door is rotatably connected to the second corner post 112, and the other part of the first compartment door is rotatably connected to the pillar 13. The second compartment door is arranged at the first end 150 for opening and closing the second compartment opening. The pipeline 18 is arranged in the frame 10 and is laid along parts of the corner posts.

Please refer to FIG. 4 and FIG. 9, the corner posts may include two second corner posts 112. As an optional embodiment, one second corner post 112 may be arranged between the first side 130 and the second end 160 for connecting to the compartment door 32 arranged at the first compartment opening, that is, the first compartment door, and another second corner post 112 can be arranged between the second side 140 and the first end 150 for connecting to the compartment door 32 arranged at the second compartment opening, that is, the second compartment door.

Please refer to FIG. 7 and FIG. 8, taking the second corner post 112 arranged between the first side 130 and the second end 160 as an example, the second corner post 112 can be recessed in a direction away from the first compartment door to form an assembly space 1120. The assembly space 1120 is configured to accommodate the hinges connecting the first compartment door to the second corner post 112. The advantage of this design is that the hinges can be installed without increasing the space occupied by the energy storage container, preventing the first compartment door in the closed state from protruding from the first side 130 of the frame 10.

The pipeline 18 can be laid along the second corner posts 112, and the surfaces of the second corner posts 112 facing the pipeline can be recessed in a direction away from the pipeline to form a first accommodation space 1140. The first accommodation space 1140 can accommodate at least a part of the pipeline, thereby avoiding assembly interference between the pipeline and the components inside the energy storage container 1.

Please refer to FIG. 9, the corner posts may include a fourth corner post 113 arranged between the first side 130 and the first end 150. Please refer to FIG. 10 and FIG. 11, the wall, close to the first side plate 311, of the fourth corner post 113 can be recessed in a direction away from the first side plate 311 to form an avoidance space 1130. The avoidance space 1130 is beneficial for improving the ease of operation for maintenance personnel to install or remove the first side panel 311.

Please refer to FIG. 9, the crossbeams may include a first crossbeam 121 arranged between the bottom side 110 and the first side 130, and two ends of the first crossbeam 121 are respectively connected to the bottom end of one second corner post 112 and the bottom end of the fourth corner post 113. Please refer to FIG. 1, a locking rod 322 is connected to one side, away from the pillar 13 or the second corner post 112, of the first compartment door. Please refer to FIG. 12 and FIG. 13, the first crossbeam 121 is recessed along its length direction to form an accommodation groove 1210. When the first compartment door is closed, the bottom end of the locking rod 322 is arranged in the accommodation groove 1210, thereby the locking rod 322 is prevented from occupying additional space in this state of the first compartment door, and the compactness of the energy storage container 1 is improved.

Please refer to FIG. 9, the crossbeams may include a second crossbeam 122. The second crossbeam 122 is arranged between the bottom side 110 and the second side 140, and two ends of the second crossbeam 122 are respectively connected to the bottom end of the first corner post 111 and the bottom end of the other second corner post 112. Please refer to FIG. 14, along the direction of gravity, the second height of the second crossbeam 122 is greater than the first height of the first crossbeam 121, which is beneficial for improving the bearing capacity of the overall frame 10.

Please refer to FIG. 3, FIG. 4, and FIG. 9, the crossbeams may include a third crossbeam 123, a fourth crossbeam 124, a fifth crossbeam 125, a sixth crossbeam 126, a seventh crossbeam 127, and an eighth crossbeams 128. The third crossbeam 123 is arranged between the top side 120 and the first side 130, and two ends of the third crossbeam 123 are respectively connected to the top end of the second corner post 112 and the top end of the fourth corner post 113. The fourth crossbeam 124 is arranged between the top side 120 and the second side 140 and two ends of the fourth crossbeam 124 are respectively connected to the top end of the first corner post 111 and the top end of the other second corner post 112. The fifth crossbeam 125 is arranged between the first end 150 and the bottom side 110, and two ends of the fifth crossbeam 125 are respectively connected to the bottom end of the other second corner post 112 and the bottom end of the fourth corner post 113. The sixth crossbeam 126 is arranged between the second end 160 and the bottom side 110, and two ends of the sixth crossbeam 126 are respectively connected to the bottom end of one second corner post 112 and the bottom end of the first corner post 111. The seven crossbeam 127 is arranged between the first end 150 and the top side 120, and two ends of the seven crossbeam 127 are respectively connected to the top end of the other second corner post 112 and the top end of the fourth corner post 113. The eighth crossbeam 128 is arranged between the second end 160 and the top side 120, and two ends of the eighth crossbeam 128 are respectively connected to the top end of one second corner post 112 and the top end of the first corner post 111. The frame 10 further includes pillars 13 and two first columns 14. On the first side 130, the multiple pillars 13 are connected between the first crossbeam 121 and the third crossbeam 123. On the second side 140, the multiple pillars 13 are connected between the second crossbeam 122 and the fourth crossbeam 124. At the first end 150, one first column 14 is connected between the fifth crossbeam 125 and the seventh crossbeam 127. At the second end 160, another first column 14 is connected between the sixth crossbeam 126 and the eighth crossbeam 128.

Please refer to FIG. 3, FIG. 4, and FIG. 9, the energy storage container 1 further includes a support beam 40. Please refer to FIG. 17, the support beam 40 includes a first wing plate 41, a second wing plate 42, and a web plate 43. The web plate 43 is connected between the first wing plate 41 and the second wing plate 42. Before the support beam 40 is assembled to the frame 10, the first edge, which is used for connecting to the first wing plate 41, of the web plate 43 needs to be designed as an arc edge. Please refer to FIG. 4 and FIG. 9, the first wing plate 41 is connected to the first cross bar 21 of each battery rack 20. At least two battery racks 20 may further include a third cross bar 25 arranged between the first cross bar 21 and the second cross bar 22. Two ends of the second wing plate 42 of the support beam 40 are respectively connected to the two third cross bars 25. Two ends of the web plate 43 of the support beam 40 are respectively connected to the two first columns 14 arranged at two ends of the frame 10. In this way, force applied to the energy storage container 1 can be transmitted to the support beam 40. When a selected battery rack 20 with a third crossbar 25 is arranged at the first end and/or the second end of the frame, taking the battery rack 20 arranged at the second end 160 as an example, in this situation, to reduce the reuse of cross bars or crossbeams and simplify the structural design of the frame, the first crossbar 21 of the battery rack 20 can be served as the sixth crossbeam 126, and the second crossbar 22 of the battery rack 20 can be served as the eighth crossbeam 128.

Please continue to refer to FIG. 4 and FIG. 9. For the two battery racks 20 connected to the second wing plate 42 of the support beam 40, a support assembly 26 is arranged at each of the two battery racks 20, and each support assembly 26 is connected to the support assembly 26, the support beam 40, the bottom side 110, the top side 120, the first side 130, and the second side 140. Each support assembly 26 may include a support body, a first support rod 261, a second support rod 262, a third support rod 263, and a fourth support rod 264. The support body may be connected between the second cross bar and the third cross bar, or may be connected to the first cross bar, the second cross bar, and the third cross bar. Ends of the first support rod 261, the second support rod 262, the third support rod 263, and the fourth support rod 264 are connected to the middle part of the support body. The other end of the first support rod 261 and the other end of the second support rod 262 are connected to two ends of the third cross bar 25. The other end of the third support rod 263 and the other end of the fourth support rod 264 are connected to two ends of the second cross bar 22. When force is applied to the energy storage container 1, the force on each side of the energy storage container can be transmitted to the support body through the first support rod 261, the second support rod 262, the third support rod 263, and the fourth support rod 264, respectively, and the force is then transmitted to the support beam 40 through the support body, which is beneficial for improving the stability and structural strength of the frame 10, thereby prolonging the service life of the energy storage container 1.

To sum up, the beneficial effects of the energy storage container according to the embodiments of the present application are as follows. Firstly, a space for accommodating at least parts of the battery racks, an installation space for installing the rotating connection assembly 34, and an accommodation space for accommodating the pipeline are formed within the corner post, so that the structural compactness of the energy storage container is improved. Secondly, a portion of the wall of the first crossbeam is recessed along its length to form an accommodation groove, the accommodation groove can accommodate the bottom end of the locking rod of the compartment door, so that the structural compactness of the energy storage container can be further improved. Thirdly, the first edge of the web plate of the support beam is formed with an arc edge before being put into use, and the support beam is connected to each battery rack, compared to the support beam without arc edge on the web plate, the advantage of this design is that when an external force in the direction of gravity is applied to the support beam, the deformation of the support beam in a direction towards the bottom side can be effectively reduced, so that the stiffness and strength of the support beam are significantly improved, thereby effectively enhancing the bearing capacity of the energy storage container and prolonging its service life. Fourthly, the support assembly is arranged on at least two battery racks, the support assembly is connected to the support beam, the bottom side, the top side, the first side, and the second side, when force is applied to the energy storage container, the force can be transmitted to the support beam through the support assembly, thereby through the support assembly, the structural strength of the frame can be further improved and the service life of the energy storage container is prolonged.

## Claims

1. ] An energy storage container configured to install battery packs, the energy storage container (1) comprising:
a frame (10) comprising a plurality of corner posts, the corner posts each extending along a direction of gravity; and
a plurality of battery racks (20) installed in the frame (10), the plurality of battery racks (20) being arranged at intervals to form an installation space for installing the battery packs (20) between every two adjacent ones of the battery racks (20);
**characterized in that** the plurality of corner posts comprise at least one first corner post (111), each first corner post (111) is arranged adjacent to the battery racks (20); the first corner post (111) comprises an inner side facing towards the battery racks (20), and a part of the inner side is recessed in a direction away from the battery racks (20) to form an accommodation space (1110), the accommodation space (1110) is configured to accommodate at least parts of the battery racks (20).

2. The energy storage container according to claim 1, further comprising a compartment door (32), wherein the compartment door (32) is rotatably connected to the frame (10);
the plurality of corner posts further comprise at least one second corner post (112), each second corner post (112) is arranged adjacent to the compartment door (32); along a thickness direction of the compartment door (32), each second corner post (112) comprises a second inner wall (1121) and a second outer wall (1122) arranged opposite to each other, and the second inner wall (1121) and the second outer wall (1122) are arranged on both sides of the compartment door (32);
wherein the second outer wall (1122) comprises a third section (11221), a fourth section (11222), and a second connecting section (11223); along the thickness direction of the compartment door (32), the third section (11221) and the second inner wall (1121) are arranged on both sides of the compartment door (32); the fourth section (11222) is arranged between the third section (11221) and the second inner wall (1121) and is arranged on a side, facing the compartment door (32), of the third section (11221); the second connecting section (11223) is bent and connected between the third section (11221) and the fourth section (11222); and an assembly space (1120) is formed by the third section (11221), the fourth section (11222) and the second connecting section (11223).

3. The energy storage container according to claim 2, further comprising a pipeline (18); wherein the second inner wall (1121) comprises a fifth section (11211), a sixth section (11212), and a third connecting section (11213); and along the thickness direction of the compartment door (32), the fifth section (11211) and the sixth section (11212) are arranged at intervals;
wherein the sixth section (11212) is arranged between the fifth section (11211) and the second outer wall (1122); the third connecting section (11213) is bent and connected between the fifth section (11211) and the sixth section (11212); a first accommodation space (1140) is formed by the fifth section (11211), the sixth section (11212), and the third connecting section (11213); and the first accommodation space (1140) is configured to accommodate a part of the pipeline (18);
wherein the plurality of corner posts further comprise at least one third corner post, each third corner post is arranged adjacent to the pipeline (18), the third corner post comprises a third inner wall adjacent to the pipeline (18); and
wherein the third inner wall is recessed in a direction away from the pipeline (18) to form a second accommodation space, and the second accommodation space is configured to accommodate a part of the pipeline (18).

4. The energy storage container according to claim 1, further comprising a side plate (31) arranged parallel to the direction of gravity, wherein the side plate (31) is connected to the frame (10);
the plurality of corner posts further comprises at least one fourth corner post (113), each fourth corner post (113) is arranged adjacent to the side plate (31); along a thickness direction of the side plate (31), the fourth corner post (113) comprises a fourth inner wall (1131) and a fourth outer wall (1132) arranged opposite to each other,
the fourth outer wall (1132) comprises a seventh section (11321), an eighth section (11322), and a fourth connecting section (11323); along the thickness direction of the side plate (31), the seventh section (11321) and the fourth inner wall (1131) are arranged on both sides of the side plate (31);
the eighth section (11322) is arranged between the seventh section (11321) and the fourth inner wall (1131), and arranged on a side, facing the side plate (31), of the seventh section (11321); the fourth connecting section (11323) is bent and connected between the seventh section (11321) and the eighth section (11322); and an avoidance space (1130) is formed by the seventh section (11321), the eighth section (11322), and the fourth connecting section (11323).

5. The energy storage container according to claim 1, wherein the frame (10) comprises a bottom side (110), a top side (120), a first side (130), and a second side (140); the bottom side (110) and the top side (120) are arranged opposite to each other, the first side (130) and the second side (140) are arranged opposite to each other, the first side (130) is connected to an edge of the bottom side (110) and an edge of the top side (120), and the second side (140) is connected to another edge of the bottom side (110) and another edge of the top side (120);
the frame (10) further comprises a plurality of crossbeams, the crossbeams each are connected to two of the corner posts; the plurality of crossbeams comprises a first crossbeam (121), the first crossbeam (121) is arranged at a connection position between the bottom side (110) and the first side (130); along the direction of gravity, the first crossbeam (121) comprises a bottom wall (1211) and a top wall (1212) arranged opposite to each other;
wherein the top wall (1212) comprises a ninth section (12121), a tenth section (12122), and a fifth connecting section (12123); the ninth section (12121) and the tenth section (12122) are arranged at intervals along the direction of gravity, the ninth section (12121) is arranged close to the first side (130) and the bottom side (110), and the tenth section (12122) is arranged close to the second side (140) and the top side (120); the fifth connecting section (12123) is bent and connected between the ninth section (12121) and the tenth section (12122); and an accommodation groove (1210) is formed by the ninth section (12121), the tenth section (12122), and the fifth connecting section (12123); and
the energy storage container (1) further comprises one or more first compartment doors; the first compartment doors is arranged at the first side (130) and rotatably connected to the frame (10); and a bottom end, close to the first crossbeam (121), of each first compartment door is accommodated by the accommodation groove (1210).

6. The energy storage container according to claim 6, wherein the plurality of crossbeams further comprise a second crossbeam (122), the second crossbeam (122) is arranged at a connection position between the bottom side (110) and the second side (140);
along the direction of gravity, the first crossbeam (121) has a first height, the second crossbeam (122) has a second height, and the second height is greater than the first height;
wherein the plurality of crossbeams further comprise a third crossbeam (123) and a fourth crossbeam (124), the third crossbeam (123) is arranged at a connection position between the first side (130) and the top side (120), and the fourth crossbeam (124) is arranged at a connection position between the second side (140) and the top side (120);
the frame (10) further comprises a plurality of pillars (13); between the first crossbeam (121) and the third crossbeam (123), as well as between the second crossbeam (122) and the fourth crossbeam (124), the plurality of pillars (13) are arranged at intervals; and in a direction parallel to the first crossbeam (121), a width of each pillar is not less than 100 mm.

7. The energy storage container according to claim 5 or 6, further comprising partitions, a bottom plate, a top plate (33), a first side plate (311), a second side plate, a third side plate, a first fireproof layer, and a second fireproof layer; wherein the partitions are connected to the frame (10) and configured to divide space inside the frame (10) into a first compartment and a second compartment; the bottom plate is arranged at the bottom side (110), the top plate (33) is arranged at the top side (120), the first side plate (311) is arranged at the first side (130), the second side plate and the third side plate are both arranged at the second side (140); the first side plate (311) and the third side plate are arranged opposite to each other, and the second side plate is arranged opposite to a plurality of first compartment doors; and
the first fireproof layer is arranged inside at least one of the first compartment doors and the second side plate; the second fireproof layer is arranged inside at least one of the partitions, the bottom plate, the top plate (33), the first side plate (311) and the third side plate; and a thickness of the first fireproof layer is smaller than a thickness of the second fireproof layer.

8. The energy storage container according to claim 5 or 6, further comprising a top plate (33), wherein the top plate (33) is arranged at the top side (120);
at least a part of the top plate (33) is arranged to be arched in a direction away from the top side (120); and
the energy storage container (1) further comprising a plurality of explosion venting plates (331), wherein the top plate (33) comprises a plurality of explosion venting openings; each of the explosion venting openings is covered by each of the explosion venting plates (331); and a strength of each of the explosion vent plates is less than a strength of the top plate (33).

9. The energy storage container according to claim 6, wherein along the direction of gravity, the battery racks (20) each comprise a first cross bar (21) and a second cross bar (22) arranged at intervals; the first cross bar (21) is connected between the first crossbeam (121) and the second crossbeam (122), and the second cross bar (22) is connected between the third crossbeam (123) and the fourth crossbeam (124); the battery racks (20) each further comprise a plurality of vertical poles (23), at least two of the vertical poles (23) are connected between the first cross bar (21) and the second cross bar (22), and at least two of the vertical poles (23) are arranged at intervals along a length direction of the first cross bar (21); and in the direction parallel to the first crossbeam (121), a width of each vertical pole (23) is not less than 50 mm.

10. The energy storage container according to claim 9, further comprising a web plate (43), wherein the web plate (43) is installed at the bottom side (110), the web plate (43) comprises a first edge away from the top side (120), the first edge is connected to the plurality of battery racks (20);
wherein the first edge comprises two web plate ends (431) arranged at two ends and a web plate middle part (432) arranged between the two web plate ends (431); the web plate middle part (432) is bent towards the top side (120); in the direction of gravity, a distance between the web plate middle part (432) and the top side (120) is smaller than a distance between either of the web plate ends (431) and the top side (120);and
wherein the energy storage container (1) further comprises a first wing plate (41), wherein the two web plate ends (431) are connected to the first wing plate (41); the web plate middle part (432) and the first wing plate (41) are arranged at intervals; the first cross bars (21) are arranged at the bottom side (110), and the first wing plate (41) is connected to each of the first cross bars (21).

11. The energy storage container according to claim 10,wherein some of the first cross bars (21) comprise a first sub-cross bar and a second sub-cross bar; the first sub-cross bar is connected between the first crossbeam (121) and the first wing plate (41), and/or the second sub-cross bar is connected between the second crossbeam (122) and the first wing plate (41);
wherein the frame (10) further comprises a fifth crossbeam (125) and a sixth crossbeam (126); in a length direction of the first wing plate (41), the fifth crossbeam (125) and the sixth crossbeam (126) are arranged at two ends of the bottom side (110); and/or
the fifth crossbeam (125) and the sixth crossbeam (126) are connected to the two ends of the first wing plate (41).

12. The energy storage container according to any one of claims 10 or 11, wherein a maximum distance between the web plate middle part (432) and the first wing plate (41) is in a range of 15 mm to 25 mm.

13. The energy storage container according to any one of claims 10 or 11, wherein the web plate (43) further comprises a second edge close to the top side (120); the energy storage container (1) further comprises a second wing plate (42), a side of the second wing plate (42) is connected to the second edge; the plurality of battery racks (20) comprise two first battery racks (210) arranged at two ends of the second wing plate (42); each first battery rack (210) comprises a third cross bar (25) arranged close to the bottom side (110); and two ends of the second wing plate (42) are respectively connected to the third cross bar (25) of the first battery rack (210).

14. The energy storage container according to any one of claims 10 or 11, wherein the frame (10) further comprises two first columns (14), the first columns (14) each are connected between the bottom side (110) and the top side (120); in a length direction of the web plate (43), one first column (14) is connected to one end of the web plate (43), and another first column (14) is connected to another end of the web plate (43).

15. The energy storage container according to claim 13, wherein at least one of the battery racks (20) further comprises a support assembly (26); and the support assembly (26) are connected to the second wing plate (42), the bottom side (110), the top side (120), the first side (130), and the second side (140).

16. The energy storage container according to claim 15, wherein the support assembly (26) comprises a support body, a first support rod (261), a second support rod (262), a third support rod (263), and a fourth support rod (264),
the support body is connected between the second cross bar (22) and the third cross bar (25), or the support body is connected to the first cross bar (21), the second cross bar (22), and the third cross bar (25); one end of the first cross bar (21), one end of the second support rod (262), one end of the third support rod (263), and one end of the fourth support rod (264) are connected to a middle portion of the support body; another end of the first support rod (261) and another end of the second support rod (262) are connected to two ends of the third cross bar (25); and another end of the third support rod (263) and another end of the fourth support rod (264) are connected to two ends of the second cross bar (22).

17. The energy storage container according to claim 16, wherein each support body comprises two second columns (265) and a first connecting rod (266); the two second columns (265) each are connected to the first cross bar (21), the second cross bar (22), and the third cross bar (25), or the two second columns (265) each are connected to the second cross bar (22) and the third cross bar (25); the two second columns (265) are arranged at intervals, and the first connecting rod (266) is connected between the two second columns (265); one of the second columns (265) is arranged close to the first side (130) and connected to the first support rod (261) and the third support rod (263), and another one of the second columns (265) is arranged close to the second side (140) and connected to the second support rod (262) and the fourth support rod (264).

18. The energy storage container according to claim 16, wherein the support body comprises a second column (265); the second column (265) is connected to the first cross bar (21), the second cross bar (22) and the third cross bar (25); or the second column (265) is connected to the second cross bar (22) and the third cross bar (25), and the second column (265) is connected to the first support rod (261), the second support rod (262), the third support rod (263), and the fourth support rod (264).

19. The energy storage container according to any one of claims 10 or 11, wherein the frame (10) further comprises a plurality of second connecting rods (16); the plurality of second connecting rods (16) are connected between the first wing plate (41) and the first crossbeam (121), as well as between the second wing plate (42) and the second crossbeam (122); and the plurality of second connecting rods (16) are arranged at intervals.

20. The energy storage container according to any one of claims 10 or 11, wherein the battery racks (20) each comprise a plurality of bearing guide rails (24), the plurality of bearing guide rails (24) are arranged between the first cross bar (21) and the second cross bar (22); for each two adjacent battery racks (20), the plurality of bearing guide rails (24) are arranged on a side, facing another battery rack (20) in the direction of gravity, of one battery rack (20); in the direction of gravity, the plurality of bearing guide rails (24) of one battery rack (20) and the plurality of bearing guide rails (24) of another battery rack (20) are arranged at a same height and opposite to each other; a bearing space for installing the battery packs (20) is formed between two bearing guide rails (24), which are arranged at a same height and opposite to each other, of two battery racks (20), and the bearing space gradually narrows from the first side (130) towards the second side (140);
wherein the bearing guide rails (24) each comprise a bearing portion (241) and a guide portion (242); the bearing portion (241) is connected to at least two of the vertical poles (23), and the guide portion (242) is fixed to the bearing portion (241); the bearing portion (241) comprises a bearing edge (24111) and a limiting edge (24112), the bearing edge (24111) is arranged to intersect with the limiting edge (24112), and the limiting edge (24112) is connected to the vertical pole (23); the bearing edge (24111) is configured to bear the battery packs (20), and the limiting edge (24112) is configured to limit a direction of movement of the battery packs (20);
the guide portion (242) comprises a guide edge (24211) and a plurality of spacer plates (2422); the guide edge (24211) is attached to the limiting edge (24112); the plurality of spacer plates (2422) are arranged at intervals from the first side (130) to the second side (140) and arranged between the guide edge (24211) and the limiting edge (24112); or some of the spacer plates (2422) are arranged between the guide edge (24211) and the limiting edge (24112), and others of the spacer plates (2422) are arranged on a surface of one side, away from the limiting edge (24112), of the guide edge (24211); and in a direction from the first side (130) to the second side (140), a thickness of the guide edge (24211) and/or a thickness of the spacer plate (2422) increases sequentially.
